(19) Europäisches Patentamt

European Patent Office

Office européen des brevets

(11) Veröffentlichungsnummer : **0 152 623**
B1

## (12) EUROPÄISCHE PATENTSCHRIFT

(45) Veröffentlichungstag der Patentschrift :
06.07.88

(21) Anmeldenummer : 84116259.7

(22) Anmeldetag : 22.12.84

(51) Int. Cl.⁴ : **F 01 N 3/02**, B 01 D 51/02,
B 03 C 3/00, B 03 C 3/06,
B 03 C 3/36

54 Einrichtung zur Entfernung von Festkörperteilen aus Abgasen von Brennkraftmaschinen.

(30) Priorität : 11.02.84 DE 3404988
30.06.84 DE 3424196

(43) Veröffentlichungstag der Anmeldung :
28.08.85 Patentblatt 85/35

(45) Bekanntmachung des Hinweises auf die Patenterteilung : 06.07.88 Patentblatt 88/27

(84) Benannte Vertragsstaaten :
AT DE FR GB IT

(56) Entgegenhaltungen :
DE-A- 3 141 156
DE-C- 858 692
US-A- 1 941 861
PROCEEDINGS OF THE INTERNATIONAL CONFE-
RENCE ON ELECTROSTATIC PRECIPITATION, Oktober 1981, Seiten 30,40, A.P.C.A., Pittsburgh, US;
PATENTS ABSTRACTS OF JAPAN, Band 7, Nr. 31 (M-
192)[1176], 8. Februar 1983; & JP - A - 57 186 012 (FUJI
DENKI SOUGOU KENKYUSHO K.K.) 16.11.1982

(73) Patentinhaber : ROBERT BOSCH GMBH
Postfach 50
D-7000 Stuttgart 1 (DE)

(72) Erfinder : Dettling, Hubert
Bildäckerstrasse 3
D-7050 Waiblingen (DE)
Erfinder : Eisele, Hermann, Dr.
Tannenweg 67
D-7143 Vahingen (DE)
Erfinder : Haag, Gottlob
Graf-Hartmann-Strasse 20
D-7145 Markgröningen (DE)
Erfinder : Hägele, Karl-Heinz, Dr.
Gerokstrasse 70
D-7143 Vaihingen (DE)
Erfinder : Linder, Ernst
Uhlandstrasse 24
D-7130 Mühlacker (DE)
Erfinder : Polach, Wilhelm, Dr.
Strombergstrasse 18
D-7141 Möglingen (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung geht von einer Einrichtung zur Entfernung von Festkörperteilen aus Abgasen von Brennkraftmaschinen nach Gattung des Hauptanspruchs aus. Eine solche durch die DE-A-31 41 156 bekannte Einrichtung weist ein Bündel von Rohren auf, in die jeweils koaxial ein Elektrodenträger eingeführt ist, auf den dicht nebeneinander angeordnete Sprühscheiben aufgereiht sind. Die Rohre werden von der Stirnseite her vom Abgas angeströmt, das in Längsrichtung die Rohre durchströmt und in eine Sammelkammer mündet, von wo es über eine Verbindungsleitung zum Zyklonabscheider geleitet wird.

In den Rohren soll der zunächst sehr fein verteilte Ruß durch Koronaentladung aufgeladen werden und sich an den Rohrungswandungen abscheiden. Sobald große Flocken oder Rußteile sich an der Wandung angesammelt haben und die Rußschicht auf eine bestimmte Dicke angewachsen ist, springt die Schicht flächig ab und die dabei entstehenden großen Rußflocken werden durch den Abgasstrom weitergetragen und zum Zyklonabscheider transportiert, wo sie mechanisch unter Einfluß von Fliehkräften ausgeschieden werden. Die bekannte Einrichtung arbeitet somit mit einer relativ geringen Abgasströmungsgeschwindigkeit innerhalb der Rohre. Insbesondere soll nach Vorschlägen der bekannten Einrichtung die Rußschicht auch mit Hilfe mechanischer Mittel wie Rütteleinrichtungen oder Blaseeinrichtungen gelöst werden. Dies bedeutet einen relativ großen Aufwand und zudem ist die Einrichtung sehr raumaufwendig, was ihre Unterbringung bei Kraftfahrzeugen, insbesondere auch Personenkraftfahrzeugen, die mit Brennkraftmaschinen betrieben werden und deren Emission frei von insbesondere Rußbestandteilen gehalten werden soll, erschwert.

Weiterhin wird bei der bekannten Einrichtung die Isolierung, über die die Träger mit dem Gehäuse der Einrichtung hochspannungsfest verbunden sind und über die die Spannungszuleitung von einer Hochspannungsquelle her erfolgt, direkt vom Abgas, insbesondere dem mit großflockigen Rußbestandteilen beladenen Abgas angeblasen, so daß es hier zu einer schnellen Verschmutzung der Isolatoroberfläche kommt. Diese Verschmutzung führt zur erheblichen Verringerung der Nebenschlußwiderstände, so daß während des Betriebes eine erhebliche Menge an Energie über die Rußschicht zum Gehäuse hin abwandern kann, was den Leistungsbedarf der Hochspannungsanlage wesentlich erhöht. Da die Hochspannungsanlage von der Brennkraftmaschine, mit der das Kraftfahrzeug betrieben wird, versorgt werden muß, so ist wegen der Leistungsentnahme für die Hochspannungsversorgung der relative Kraftstoffverbrauch solcher Kraftfahrzeuge ebenfalls merklich erhöht. Ziel der Kraftfahrzeughersteller ist es jedoch, verbrauchs- und leistungsoptimierte und damit gewichtsoptimierte Fahrzeuge zu bauen. Zu diesem Zweck wird auch angestebt, den Energiebedarf für die Entfernung von Festkörperteilen aus dem Abgas so gering wie möglich zu halten. Weiterhin kann es bei der bekannten Einrichtung zu einer diskontinuierlichen Arbeitsweise kommen, indem periodisch sich Rußbestandteile an den Rohrwänden anlagern und wiederum periodisch abgelöst werden, wobei es zu periodisch zunehmenden und abnehmenden Rußabscheidungen oder auch zu zeitweiliger Überlastung des Zyklonabscheiders kommt. Insbesondere dann, wenn der ausgeschiedene Ruß wieder der Saugseite der Brennkraftmaschine zugeführt wird, um dort mit dem Frischgemisch zusammen nachverbrannt zu werden, macht sich eine solche pulsierende Rußrückführung negativ auf die Arbeitsweise der Brennkraftmaschine bzw. auf das Verbrennungsergebnis bemerkbar. Während bei stationären Anlagen genügend Platz zum Bunkern ausgeschiedener Festkörperteile bereitgestellt werden kann, wobei das Gewicht der Anlage dafür keine Rolle spielt, sind diese Punkte bei Kraftfahrzeugen besonders problematisch. Bei einem Zwischenlagern des ausgeschiedenen Teile müssen zumindest für die Entsorgung die Serviceintervalle eingehalten werden.

Die erfindungsgemäßen Einrichtungen mit den kennzeichnenden Merkmalen der Ansprüche 1 und 4 haben demgegenüber den Vorteil, daß der Hochspannungsleistungsbedarf in dem elektrostatischen Teil der Einrichtung, der auch als elektrostatisches Filter bezeichnet werden kann, verringert wird, da der Prozeß der Teilchenvergrößerung durch die hohe Strömungsgeschwindigkeit intensiviert wird, wie das in der nachfolgenden Beschreibung noch näher erläutert werden wird. Weiterhin erhält man aufgrund der hohen Strömungsgeschwindigkeit eine verhältnismäßig kleine Bauform, und zwar in der Größenordnung wie die von Abgasschalldämpfern bei konventionellen Personenkraftfahrzeugen. Vor allem läßt sich auch eine langgestreckte schmale Bauform verwirklichen. Damit läßt sich die Einrichtung vorteilhaft anstelle eines Abgasschalldämpfers einbauen, wobei die Einrichtung zum Teil bereits schalldämpfende Funktionen mit übernimmt. Die hohe Strömungsgeschwindigkeit erhöht weiterhin die Konstanz der Funktion und die Funktionssicherheit allgemein gegenüber der bekannten Einrichtung. Der Abgasstrom wird gleichmäßig auf einen relativ kleinen Durchströmquerschnitt konstanter Größer aufgeteilt.

Dabei wird das Gesamtvolumen der Einrichtung gleichmäßig durchströmt und vollständig ausgenutzt. Durch die hohe Strömungsgeschwindigkeit erfolgt ein beständiges Ausblasen des Rußes und der entstehenden größeren Rußteile, ohne daß diese sich an den Wänden in größeren Mengen festsetzen. Damit wird vermieden, daß ein pulsierendes Ablösen von Rußteilen ein Pulsieren der Rußrückführungsmenge bei Entsorgung über die Brennräume der Brennkraftmaschine bewirkt.

Die spontane Weiterbeförderung der Rußteilchen verhindert auch ein Absetzen derselben auf den Elektroden, wodurch die Neigung des elektrostatischen Filters herabgesetzt wird, bei sich mit Dicke von Rußablagerungen verringernden Elektrodenabständen Spannungsdurchschläge zu erzeugen. Kurzzeitige und wiederholte Ausfälle des Filters durch Spannungseinbrüche aufgrund solcher Durchschläge werden weitgehend vermieden.

Zwar ist durch die US-A-1 941 861 die Verwendung von hohen Gasströmungsgeschwindigkeiten im hier angesprochenen Bereich bekannt, doch handelt es sich bei den dort beschriebenen Einrichtungen um Anlagen, die insbesondere auch nicht zur Reinigung von Brennkraftmaschinenabgasen bei Kraftfahrzeugen dienen. Bei der bekannten Anlage wird eine konstante Gasstromgeschwindigkeit eingestellt, wobei auch offenbar im wesentlichen eine konstante Abgasmenge anfällt. Insbesondere soll bei der bekannten Anlage eine dichte, gleichförmige Schicht von abgelagerten Teilchen auf den dort vorgesehenen Sammelelektroden erreicht werden, um die Tendenz einer örtlichen Spannungsentladung zu verhindern. Die Luftströmung dort soll also nicht verhindern, daß sich auf den Elektroden ein dichter Belag ablagert, ganz im Gegensatz zum Gegenstand der im vorstehenden diskutierten Erfindung, wo eine solche Ablagerung nicht erwünscht ist. Durch die bei der bekannten Anlage angestrebte Art von Ablagerung würden zudem auch Tendenzen begünstigt, Kriechströme über die Ablagerungsschichten zwischen den Elektroden zu erzeugen. Dies bedeutet einen Energieverlust, der bei der Anwendung gemäß Anspruch 1 nicht vertretbar wäre. Bei Brennkraftmaschinen, die für den Betrieb von Kraftfahrzeugen eingesetzt werden, ändert sich insbesondere die Abgasmenge mit der eingestellten Last, so daß sich die Abgasgeschwindigkeit bei konstantem Durchflußquerschnitt dynamisch stark ändert. Aus diesen Gründen können die bei stationären Anlagen vorgenommenen Maßnahmen nicht ohne weiteres auf dieses besondere Anwendungsgebiet übertragen werden.

Mit der erfindungsgemäßen Lösung nach Anspruch 1 kann in einfacher Weise die Entsorgung der Brennkraftmaschine in festgelegten Intervallen erfolgen, wobei insbesondere bei den nach Anspruch 2 ausgeschiedenen Feststoffteilen, die z. B. in einem Filterbeutel (Papierfilter, Metallfilter etc.) ähnlich dem bekannten Staubsaugerbeutel gesammelt wurden, die Entsorgung durch Verbrennen des Rußes aus diesen Beuteln oder der Beutel insgesamt erfolgt. Dies geschieht schadstofffrei in einer stationären Verbrennungsanlage. Es werden der Betriebsaufwand und die Betriebsunsicherheit, die bei anderen Systemen, z. B. durch Verstopfen der Filter entstehen kann, mit Sicherheit vermieden bei geringstem Aufwand. Gegenüber einer Entsorgung, bei der die ausgeschiedenen Feststoffteile der Saugseite der Brennkraftmaschine zur Nachverbrennung zugeführt werden, wird mit dieser Maßnahme verhindert, daß ein übermäßiger Verschleiß der Brennkraftmaschine aufgrund dieser zugeführten Feststoffteile vermieden wird.

Durch die Ausgestaltung gemäß Anspruch 4 wird die Servicefreundlichkeit einer mit dieser erfindungsgemäßen Einrichtung zur Entfernung von Festkörperteilen aus den Abgasen betriebenen Brennkraftmaschine erhöht. Die im Bereich der Brennkammer und des Heizkörpers noch nicht verbrannten Festkörperteilchen werden letztendlich von dem Filter aufgefangen, das selbst von den Verbrennungsgasen beheizt die für die Nachverbrennung der Festkörperteilchen wie Ruß notwendige Temperatur aufweist. Am Auslaß des Filters tritt nur gereinigtes Gas aus zu einem gesonderten Auslaß. Eine Wartung bzw. Entsorgung in festgelegten Betriebsintervallen entfällt. Dabei ist der für die Rußverbrennungseinrichtung notwendige Energiebedarf besonders niedrig, da die entstehende Verbrennungswärme zur Erhöhung der Entflammbarkeit der zu verbrennden Festkörperteile ausgenutzt wird. Durch Nachverbrennung wird insbesondere das Abscheideergebnis des Fliehkraftabscheiders nicht verschlechtert.

Durch die japanische Patentanmeldung JP-A-57-18 60 12 ist eine Rußnachverbrennungseinrichtung bekannt, bei der die aus dem Feststoffauslaß eines Fliehkraftabscheiders ausgetragenen Rußpartikel in eine Brennkammer eingebracht werden, die eine elektrische Heizeinrichtung aufweist und in die Zusatzluft eingeblasen wird. Diese Brennkammer ist aber sehr großvolumig ausgebildet und es münden in die Brennkammer die Feststoffeinlässe von zwei nebeneinander angeordneten Fliehkraftabscheidern. Weiterhin ist die Heizeinrichtung als relativ kleiner, in der Mitte des Brennraumes zwischen den Feststoffeinlässen angeordneter Heizkörper ausgebildet, der ringsum vom Abgas umgeben wird, aber nicht geeignet ist, alle in die Brennkammer eingebrachten Gas- und Festkörperteile mittelbar zu erwärmen. Ferner ist an der Brennkammer keine Austrittsöffnung für die aus der Rußnachverbrennung resultierenden Brenngase vorgesehen, so daß diese wieder über die Feststoffeinlässe zurück in die Fliehkraftabscheider eindringen können. Bei dieser Einrichtung ist somit eine optimale Abtrennung der Festkörperteilchen und deren Entsorgung nicht möglich. Auch ist mit einem hohen Energiebedarf zu rechnen.

Durch die Ausgestaltung gemäß dem Anspruch 5 wird dem verminderten Sauerstoffangebot im Abgas der Brennkraftmaschine Rechnung getragen, indem die fehlende Luft, insbesondere bei Vollastbetrieb, dem mit Feststoffteilen beladenen Abgas zusätzlich zugeführt wird. In besonders vorteilhafter Weise wird dabei als Luftquelle gemäß Unteranspruch 7 die Entlüftung des Kurbelwellengehäuses verwendet. Das dort entströmende Gas enthält ausreichend Sauerstoff unter dem für die Zuführung zum unter Druck stehenden Abgas notwendigen Gasdruck.

Zeichnung

Fünf Ausführungsbeispiele der Erfindung sind in der Zeichnung dargestellt und werden in der nachfolgenden Beschreibung näher erläutert. Es zeigen Figur 1 ein erstes Ausführungsbeispiel der Erfindung, Figur 2 ein zweites Ausführungsbeispiel der Erfindung, Figur 3 ein drittes Ausführungsbeispiel der Erfindung mit einer ersten Einrichtung zur Entsorgung der ausgeschiedenen Festkörperteile, Figur 4 ein viertes Ausführungsbeispiel der Erfindung mit einer ersten Einrichtung zur Nachverbrennung der ausgeschiedenen Festkörperteile und Figur ein fünftes Ausführungsbeispiel mit einer zweiten Einrichtung zur Nachverbrennung der ausgeschiedenen Festkörperteile mit Zusatzkraftstoff.

Beschreibung der Ausführungsbeispiele

Das von einer nicht weiter dargestellten Brennkraftmashcine an das Abgassammelsystem abgegebene Abgas wird über eine Verbindungsleitung 1 einer Einrichtung zur Entfernung von Festkörperteilchen aus den Abgasen von Brennkraftmaschinen, die im folgenden kurz als elektrostatische Rußweiche 2 bezeichnet wird, zugeführt. Die Verbindungsleitung 1 mündet in ein Spiralgehäuse 3 tangential ein, das sich koaxial am Ende eines langgestreckten Rohres 4 so anschließt, daß es an der dem Rohrdurchmesser benachbarten Stirnseite offen ist. Am anderen Ende des Rohres schließt sich ein zweites Spiralgehäuse 6 an, das ebenfalls zum Inneren des Rohres 4 offen ist und koaxial zu diesem angeordnet ist und von dem tangential eine Verbindung 7 abgeht, die wiederum tangential in einen Einströmzylinder 8 eines Fliehkraftabscheiders 9 einmündet. Der hier als Zyklonabscheider ausgebildete Fliehkraftabscheider liegt parallel zur Achse des Rohres 4 und weist in üblicher Ausgestaltung den Einströmzylinder 8 auf, an dem sich koaxial mit geringerem Durchmesser ein Zylinder 10 anschließt, der in einen sich kegelförmig verjüngenden Teil 11 übergeht. An diesen schließt sich eine Sammelkammer 12 an mit einem Auslaß 14. Vom Einströmzylinder 8 her taucht ein Tauchrohr 15 koaxial in den Zylinder 10 hinein, von wo es verschmutzungsarmes Gas nach außen leitet.

In dem Rohr 4 erstreckt sich koaxial ein Elektrodenträger 16 aus elektrisch leitendem Material, auf dem in regelmäßigen Abständen Sprühscheiben 17 aufgereiht sind, die am Umfang eine Vielzahl von scharfen Kanten oder Spritzen aufweisen. Der Elektrodenträger ist auf seiner einen Seite über einen Hochspannungsisolator 18 mit der Stirnwand 20 des ersten Spiralgehäuses verbunden und auf der anderen Seite über einen Hochspannungsisolator 19 mit der Stirnwand 21 des zweiten Spiralgehäuses 6 verbunden. Der Hochspannungsisolator 19 weist ferner eine Durchführung 22 auf, über die der Elektrodenträger mit einer Hochspannungs-Gleichstromquelle 23 verbunden ist. Der andere Pol der Hochspannungsquelle 23 ist elektrisch mit der elektrisch leitenden Rohrwand des Rohres 4 verbunden. Mit Abstand umgibt ferner die Hochspannungsisolatoren 18 und 19 ein Schutzrohr 24, 25, das koaxial zur Achse des Rohres 4 liegt, mit der Stirnwand 20 bzw. 22 festverbunden ist und sich in Achsrichtung soweit erstreckt, daß es über die Breite der Verbindungsleitung 1 bzw. 7 ragt, nicht jedoch den Hochspannungsisolator 18 bzw. 19 überragt. Zwischen dem Innendurchmesser des langgestreckten Rohres 4 und dem Außendurchmesser der Sprühscheiben 17 bzw. des Schutzrohres 24 befindet sich ein Ringraum 26 konstanter Breite, über den das Abgas das Rohr 4 ungehindert durchströmen kann.

. In seiner Wirkungsweise stellt das Rohr 4 mit den Sprühscheiben 17 einen elektrostatischen Agglomerator dar. Das von der Brennkraftmaschine kommende Abgas wird über die Verbindungsleitung 1 tangential in das Spiralgehäuse 3 eingeführt, von wo es seitlich mit einer starken Drallströmung in den Ringraum 26 austritt, das Rohr 4 wendelförmig durchläuft und über das zweite Spiralgehäuse 6 tangential in den Einströmzylinder 8 des Zyklonabscheiders 9 eingeleitet wird. In diesem setzt das Abgas seine Drallströmung fort, gelangt in den Zylinder 10 und den sich anschließenden, kegelförmig verjüngenden Teil 11. Der größte Teil des Abgases strömt dann über das Tauchrohr 5 wieder zurück, während ein geringer Teil des Abgases über den Auslaß 14 abströmt.

Das in die Verbindungsleitung 1 einströmende Abgas ist, insbesondere, wenn es von Abgasen von Dieselbrennkraftmaschinen stammt, mit sehr fein verteiltem Ruß beladen, dem auch andere Fremdstoffe bzw. Festkörperteilchen beigemischt sein können. Nach Eintritt in das Rohr 4 wird das Abgas einem starken elektrischen Feld ausgesetzt, bei dem es an den Spitzen der Sprühscheiben 17 zu Koronaentladungen kommt. An den Sprühscheiben ist der negative Pol der Hochspannungsquelle angelegt. Die Koronaentladung brennt in dem Ringraum 26 zwischen Sprühscheiben und Wand des Rohres 4. Die in die Koronaentladung gelangenden Rußteilchen werden künstlich elektrisch geladen. Zwischen den geladenen Rußteilchen wird über starke elektrostatische Kräfte ein heftiges wechselseitiges Stoßen eingeleitet. Beim Stoß haften die Rußteilchen aneinander und wachsen damit während ihres Durchflugs durch den Ringraum 26 zunehmend zu größeren Rußteilchen auf.

Genau genommen können zwei Stoßprozesse bei diesem Vorgang unterschieden werden. Das ist einmal ein Teilchen-Wand-Stoßprozeß, der sich ergibt, wenn die elektrisch beladenen Rußteilchen über die elektrostatischen Kräfte von den Sprühscheiben 17 weg zur Wand des Rohres 4 beschleunigt werden. Die anfliegenden Rußteilchen stoßen an der Wand mit dort eventuell schon haftenden Rußteilchen zusammen, legen sich aneinander und wachsen an der Wand zu größeren Rußteilchen auf. Diese entladen sich an der Wand durch Abfluß der Ladungen über eine dünne an der Wand haftende Rußschicht, verlieren dadurch ihre Haftung zur Wand und werden durch Strömungskräfte des durchströmenden Abgases kurz nach ihrem Auftreffen auf der Wand wieder losgerissen. Dabei werden sie wiederum künstlich elektrisch beladen, allerdings mit positiven Vorzeichen. In dem Ringraum 26 werden diese losgerissenen größeren Rußteilchen wiederum mit den negativen freien Ladungsträgern aus der Koronaentladung künstlich beladen und zurück zur Wand beschleunigt. Der Stoßprozeß mit der Wand beginnt von Neuem.

Es findet ferner ein Teilchen-Teilchen-Stoßprozeß statt. Die von den Sprühscheiben negativ beladenen und von der Wand des Rohres 4 losgerissenen, positiv beladenen Rußteilchen stoßen im Flug in dem Ringraum aufeinander und haften aneinander durch elektrostatische und mechanische Haftkräfte. Die vergrößerten Rußteilchen werden durch elektrisch geladene Rußteilchen oder freie Ladungsträger wieder umgeladen und je nach Ladungsvorzeichen in Richtung Sprühscheibe oder Rohrwand beschleunigt. Dieser Stoßprozeß wird durch die Beladung der Teilchen stark intensiviert, weil der Stoßquerschnitt durch die starke Anziehung über Coulomb'sche Kräfte sehr weit über den Teilchenquerschnitt hinaus vergrößert ist.

Abweichend von elektrostatischen Filtern bekannter Bauart ist die hier beschriebene elektrostatische Rußweiche so dimensioniert, daß die Abgasgeschwindigkeit in dem Ringraum mehr als 2,5 m/sec, vorzugsweise aber mindestens 5 m/sec beträgt. Diese Geschwindigkeit kann bis zu 30 m/sec vergrößert werden. Dabei ist als obere Grenze der Fall zu werten, bei dem die Stabilität der Koronaentladung durch die hohe Gasgeschwindigkeit gestört wird.

Die hohen Strömungsgeschwindigkeiten bedingen, daß die Rußteilchen nur einen flüchtigten Kontakt mit der Wand des Rohres 4 haben, weil sie durch die Strömungskräfte sofort wieder losgerissen werden. Es kommt damit zu keinen zunehmenden Ablagerungen und zu keiner Abscheidung von Ruß innerhalb des Rohres 4. Dieser elektrostatische Teil dient lediglich dazu, daß zwischen den Rußteilchen ein intensiver Stoßprozeß eingeleitet wird und die sehr kleinen Rußteilchen zu großen Rußteilen anwachsen. Diese verlassen mit dem Abgas das Rohr 4 und gelangen danach in den Zyklonabscheider 9. Dort werden sie unter Einwirkung der Fliehkraft und einer beschleunigten Rotationsbewegung an den Wänden des Zyklonabscheiders abgeschieden und wandern in die Sammelkammer 12 zusammen mit einem kleinen Abgasteilstrom. Das im Kern des Zyklonabscheiders befindliche Abgas strömt als gereinigtes Abgas über das Tauchrohr 15 nach außen ab, wo es gegebenenfalls unter Zwischenschaltung eines Nachschalldämpfers ins Freie abströmen kann. Der Teilstrom von Abgas, der über den Auslaß 14 abströmt, ist hingegen sehr stark mit den abgeschiedenen Rußteilchen beladen und kann dann entweder in einen Sammeltank gelangen oder vorzugsweise zur vorteilhaften Entsorgung der Einrichtung zur

Saugseite der Brennkraftmaschine zurückgeführt werden. Dies ist vorteilhaft, da Brennkraftmaschinen für den Fahrzeugbetrieb ohnehin zur Verbesserung der Abgasemission, insbesondere zur Minderung der NOX-Bestandteile mit Abgasrückführung betrieben werden. Das rückgeführte Abgas leitet zusätzlich den abgeschiedenen Ruß ein, der in den Brennräumen der Brennkraftmaschine nachverbrannt werden kann.

Dadurch, daß gegenüber üblichen elektrostatischen Filtern mit einer zehnmal höheren Strömungsgeschwindigkeit gefahren wird, werden die Teilchen im Abgas nicht mehr im Filter ausgeschieden, sondern lediglich im Durchflug in größere Teilchen umgewandelt. Es ist dabei wesentlich, daß die Partikel über längere Strecken mit dieser hohen Strömungsgeschwindigkeit zwischen zwei Feldelektroden, die Sprühscheiben 17 und die Wand des Rohres 4, mit unterschiedlicher Polarität geführt werden, damit die Teilchen durch wiederholte Umladungsprozesse möglichst häufig und wiederholt miteinander zusammenstoßen. Der Prozeß der Partikelvergrößerung wird durch die hohe Strömungsgeschwindigkeit intensiviert, da die Partikel durch erhöhte Strömungsturbulenz innerhalb der Zonen der Koronaentladung gleichmäßiger elektrisch geladen werden als bei geringen Gasgeschwindigkeiten. Es sind dadurch geringere Ladungsüberschüsse und damit geringere Hochspannungsleistungen für den Betrieb der elektrostatischen Rußweiche erforderlich. Weiterhin wird die Stoßzahl zwischen den Partikeln im Vergleich zu sonst üblichen Filtern erhöht, weil die Teilchen-Teilchen-Stoß-Prozesse erst durch das häufig wiederholte Losreissen der Teilchen von der Wand ermöglicht werden.

Die Verwendung hoher Abgasgeschwindigkeiten innerhalb des Rohres läßt den Bau einer elektrostatischen Rußweiche zu, die im Hinblick auf Bauform, Bauvolumen und Funktionssicherheit wesentlich besser dem Einsatz im Kraftfahrzeug angepaßt ist als andere Filter, die mit geringen Strömungsgeschwindigkeiten arbeiten. Durch die achsparallele Lage des Zyklonabscheiders ergibt sich eine flache Bauweise, die eine Unterflurmontage bei Kraftfahrzeugen ermöglicht und deren Baugröße in Form und Bauvolumen einem Abgasschalldämpfer vergleichbar ist. Bei der vorgesehenen hohen Strömungsgeschwindigkeit mit einer eingeleiteten Drallströmung kann der Abgasstrom gleichmäßig auf den schmalen Ringraum 26 aufgeteilt werden. Diffusoren oder ähnliche kritische Strömungselemente brauchen nicht eingesetzt zu werden, so daß Kurzschlußströmungen im Rohr 4 entfallen. Das Volumen des Rohres wird vollständig ausgenutzt.

Die hohe Strömungsgeschwindigkeit sorgt weiter dafür, daß kein Ruß im Rohr abgelagert wird und das Rohr ständig gleichmäßig entsorgt wird. Ein plötzlicher Ausstoß größerer Mengen an zwischengelagertem Ruß wird somit vermieden. Das hätte eine kurzzeitige Überlastung des Zyklonabscheiders zur Folge. Eine schubweise Rußkonzentrationsanhebung sowohl im über das Tauchrohr austretenden Abgas als auch im über den Auslaß 14 austretenden Abgas wäre die Folge. Neben einer Umweltverschmutzung wäre zusätzlich auch der Verbrennungsprozeß negativ stoßweise oder pulsierend beeinflußt. Die gleichmäßige Entsorgung des Rohres 4 hat weiterhin zur Folge, daß sich auf beiden Elektroden im Laufe des Betriebes keine anwachsende Rußschicht absetzt, die den Elektrodenabstand verringern würde. Damit ist die Neigung zu elektrischen Durchschlägen stark herabgesetzt. Kurzzeitige und wiederholte Ausfälle durch Spannungseinsbrüche werden damit vermieden.

Die konstruktive Anordnung ermöglicht eine hohe Drallsteuerung des Abgases innerhalb des Rohres 4, die wiederum die Betriebssicherheit der Hochspannungsisolation verbessert. Im Zentrum der Drallströmung, im Bereich der Hochspannungsisolatoren 18 und 19 ist der Anteil von Ruß im Abgas erheblich vermindert, da die Rußteilchen durch die große Drallströmung nach außen weg geschleudert werden. Außerdem verhindert die hohe Strömungsgeschwindigkeit am Isolator selbst ebenfalls die Bildung dickerer Rußschichten. Die Isolatoren werden somit weniger verschmutzt, so daß ihre berechneten Ableitwiderstände während des Betriebs der Einrichtung erhalten bleiben. Die Isolatoren können zudem durch die Schutzrohre 24 und 25 weiterhin gegen ein Anströmen des eintretenden Abgases geschützt werden. Die Durchschlagfestigkeit und Betriebssicherheit der Isolatoren führt dazu, daß deswegen der Leistungsbedarf für die elektrostatische Rußweiche verhältnismäßig klein gehalten werden kann.

Da im Abgas von Brennkraftmaschinen wie selbstzündende Brennkraftmaschinen neben Ruß auch nicht brennbare, feste Bestandteile, wie z. B. Rost, Abrieb, Achse usw. vorhanden sind, können diese Teile, wenn sie unmittelbar in die Brennräume der Brennkraftmaschine zurückgeführt werden, zu erhöhtem Verschleiß der Brennkraftmaschine führen. Deshalb kann in einer zusätzlichen Ausgestaltung stromaufwärts der Einmündung der Verbindungsleitung in das Spiralgehäuse 3 ein zusätzlicher Zyklonabscheider 28 vorgeschaltet werden, in dem diese schwereren Teilchen aus dem Abgas abgeschieden werden. Die ausgeschiedenen Teilchen können entweder in einen Bunker 29 geleitet werden oder mit einer Teilabgasmenge von 1 bis 2 % des gesamten Abgasstromes ins Freie befördert werden. Da es sich nur um eine kleine Menge handelt, wird der Abscheidegrad der gesamten Einrichtung dadurch nicht wesentlich verringert. Dadurch wird in den Brennräumen der Brennkraftmaschine nur die Hauptteilchenlast des Abgases, die aus weichen und verbrennbaren Rußteilchen besteht, zugeführt.

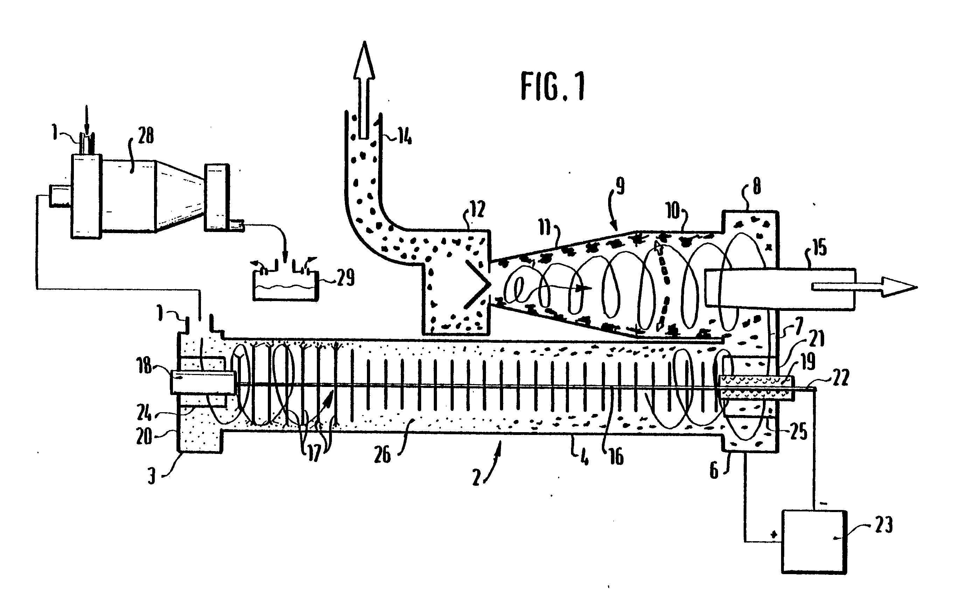

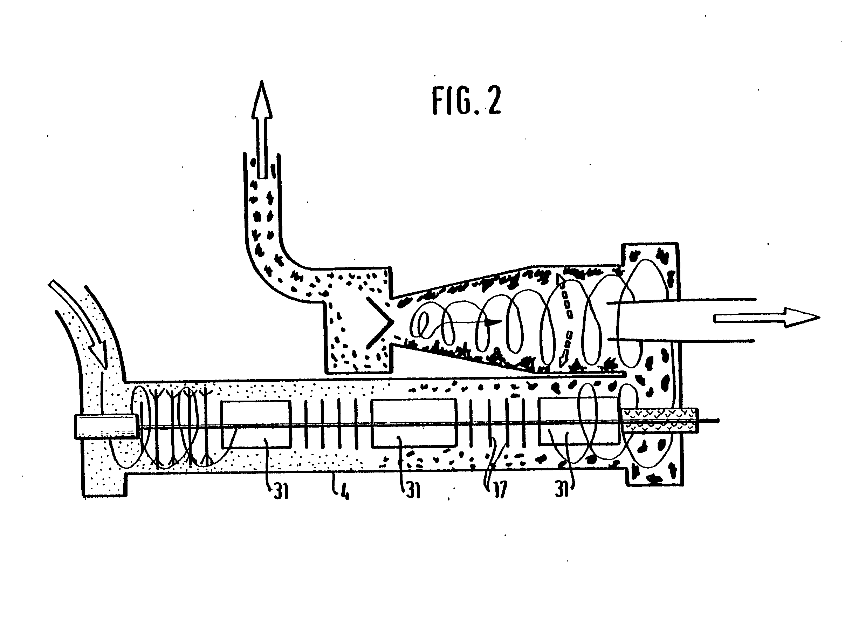

In Figur 2 ist eine abgewandelte Ausführungsform der elektrostatischen Rußweiche gemäß Figur 1 dargestellt, wo abschnittsweise die Sprühscheiben 17 durch Zylinderelektroden 31 ersetzt sind. Im übrigen ist die Einrichtung gleich aufgebaut wie bei der Ausführungsform nach Figur 1. Mit dieser Anordnung wird bei gleicher Baugröße derselbe Wirkungsgrad im Hinblick auf die Teilchenvergrößerung erreicht. Der elektrische Leistungsbedarf hierfür wird jedoch durch diese Einrichtung vermindert, weil im Bereich der Zylinderelektroden 31 nur ein elektrostatisches Feld ohne brennende Koronaentladung aufgebaut wird. Dadurch, daß am Eintritt des Abgases in das Rohr 4 zunächst Sprühscheiben 17 vorgesehen sind, denen dann im Wechsel Zylinderelektroden 31 und Sprühscheibenabschnitte 17 folgen, wobei am Ende des Rohres eine Zylinderelektrode 31 vorgesehen ist, werden die Rußteilchen im Abgas unmittelbar beim Eintritt in das Rohr 4 zunächst elektrisch geladen. Dadurch wird zugleich ein intensiver Teilchen-Wand-Stoßprozeß eingeleitet. Am Ende der Sprühscheibenstrecke und beim Eintritt in die erste Feldstrecke im Bereich der Zylinderelektrode 31 sind elektrisch geladene Rußteilchen mit beiden Polaritäten vorhanden. Diese werden durch die Feldkräfte jeweils auf Elektroden mit entgegengesetzten Vorzeichen beschleunigt. Die dort ankommenden Teilchen werden entladen und umgeladen, wenn sie von der Wand durch die Strömungskräfte des Abgasstromes wieder losgerissen werden. Es sind durch diesen Umladeprozeß im reinen Feldbereich Teilchen mit beiden Vorzeichen auf längeren Strecken vorhanden, so daß sich der Teilchen-Wand-Stoßprozeß fortlaufend wiederholen kann und die Teilchen zu größeren Teilchen aufwachsen können mit gleichem Erfolg wie beim Ausführungsbeispiel nach Figur 1. Im Feldbereich fließt hingegen ein geringerer Strom als im Bereich der Koronaentladungen der Sprühscheibenstrecke, weil im Feldbereich nur die an den Rußteilchen haftenden Ladungen und keine freien Überschußladungen transportiert werden müssen. Die Aufeinanderfolge von Strecken mit Sprühscheiben und zylindrischen Elektroden hat den Vorteil, daß wenn sich im Bereich der Feldstrecken beim Teilchen-Teilchen-Stoßprozeß neutrale Rußteilchen bilden, diese im Bereich der Koronaentladung der Sprühscheibenstrecke wieder künstlich beladen werden. Die Stoßprozesse werden danach wieder erneut intensiviert, so daß bei möglichst kurzen Flugzeiten durch das Rohr bzw. bei kleiner Baulänge des Rohres möglichst große Teilchen entstehen.

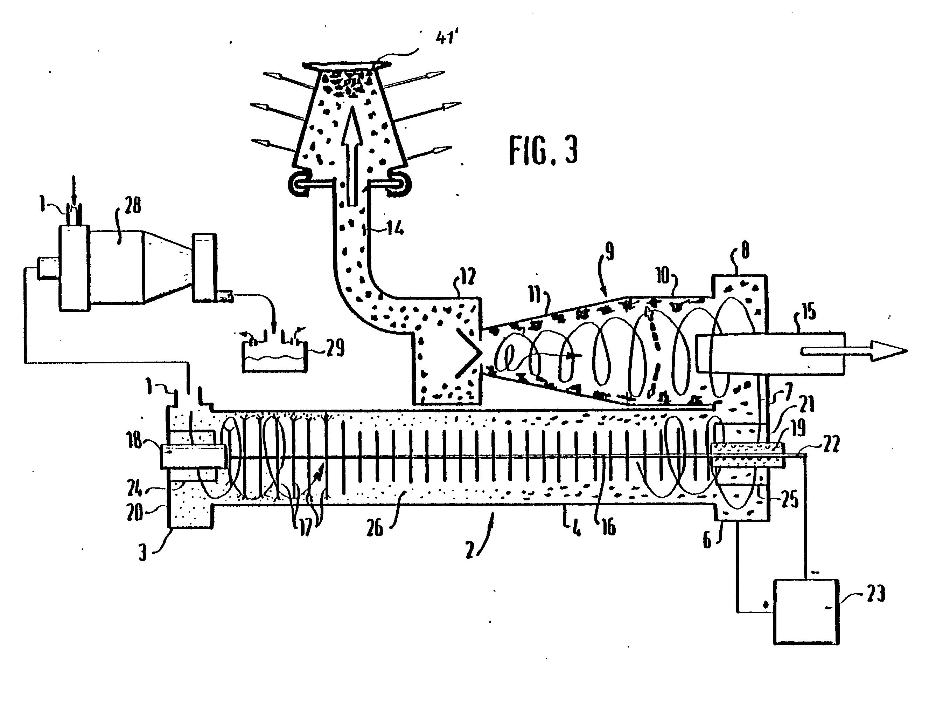

In Figur 3 ist am Beispiel des Ausführungsbeispiels nach Figur 1 als Sammelbehälter 41, in den der Auslaß 14 des Fliehkraftabscheiders 9 mündet, ein Sammelbeutel aus Papier dargestellt, der als abnehmbarer Sammelbeutel 41' ausgebildet ist. Der vom Fliehkraftabscheider ausgeschiedene Ruß und die übrigen Feststoffanteile werden dann statt der Saugseite der Brennkraftmaschine in diesen Filter geführt, der ähnlich wirkt, wie der Papierbeutel bei Staubsaugern. Sobald der Beutel gefüllt ist, kann er ausgetauscht werden, wobei das Fassungsvermögen des Sammelbeutels so gewählt ist, daß er bei sonstigen bereits notwendigen Betriebsunterbrechungen der Brennkraftmaschine, wie z. B. bei Nachtanken oder am Ende von Tagesfahrten gegen einen neuen, leeren Sammelbeutel ausgewechselt werden kann. Die vollen Beutel können dann schadstofffrei in einer stationären Anlage verbrannt werden. Diese lösung ist z. B. bei gewerblichen Kraftfahrzeugen wie bei Gabelstaplern, Linienbussen, Baumaschinen o. ä. vorteilhaft anwendbar. Der Filter kann natürlich auch aus anderem, nicht brennbaren Material bestehen und muß dann in entsprechend anderer Weise entsorgt werden. Durch diese hier gewählte Entsorgung wird mit Sicherheit ein Verschleiß bei der Brennkraftmaschine vermieden, der sonst bei der Rückführung der ausgeschiedenen Feststoffteile zur Saugseite der Brennkraftmaschine auftreten kann. Gegenüber sonst gebräuchliden Filteranlagen, die poröse Wände benutzen, entfällt bei dieser Lösung eine Verstopfungsgefahr, die eine nicht unbeträchtliche Betriebsunsicherheit mit sich bringt und einen hohen Überwachungsaufwand bedingt.

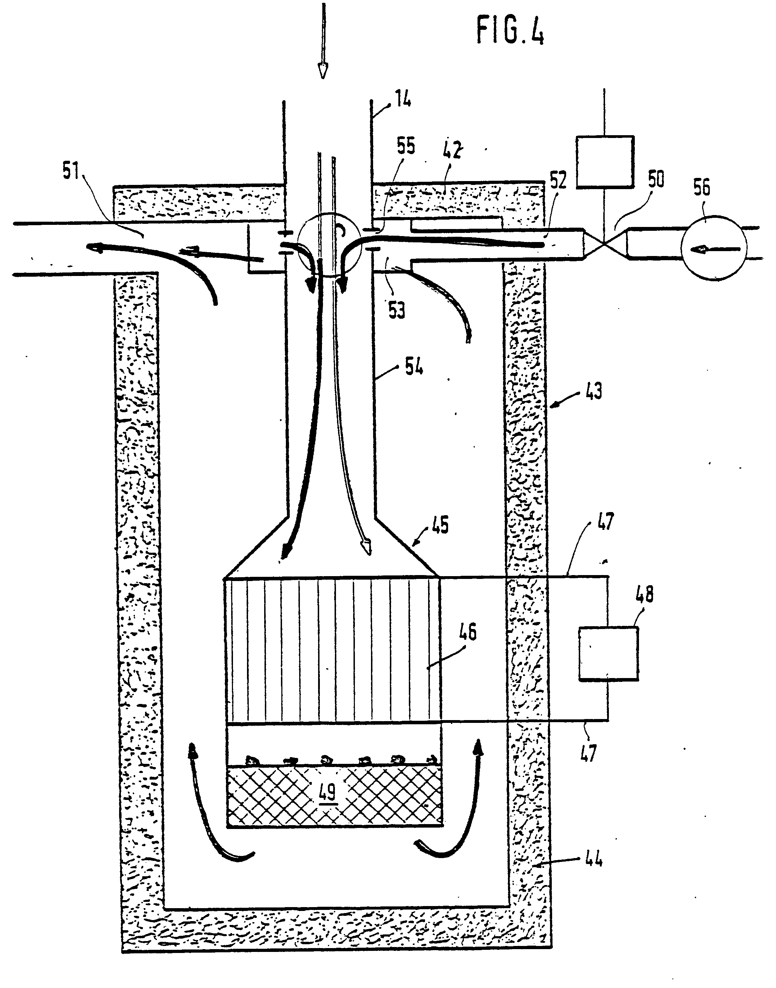

Bei dem Ausführungsbeispiel nach Figur 4 führt der Auslaß 14 des Fliehkraftabscheiders 9 in eine Rußverbrennungseinrichtung 43, die aus einem Gehäuse 44 besteht, in das eine Brennkammer 45 eingesetzt ist. Die Verlängerung des Auslasses 14 ragt als Tauchrohr 54 koaxial von der einen Stirnseite 42 her ins Gehäuse 44 und mündet dort in die Brennkammer 45. Diese weist einen elektrischen Heizkörper 46 auf, der über elektrischen Anschlußleitungen 47 von einer außerhalb des Gehäuses 44 liegenden Stromquelle 48 versorgt wird. Die Brennkammer 45 ist auf der dem Auslaß 14 abgewandten Seite, zum Boden des Gehäuses 44 hin offen und weist an dieser Stelle ein dem Heizkörper 46 nachgeschaltetes Filter 49 auf. Das Gehäuse 44 hat seinen Auslaß bei der Stirnseite 42. Dort führt radial eine Abgasleitung 51 ab. Weiterhin mündet an dieser Seite seitlich eine Verbrennungsluftzuführleitung 52 ein, die zu einer das Tauchrohr 54 an der Stirnseite 42 umgebende Ringkammer 53 führt. Zwischen Ringkammer und dem Inneren des Tauchrohres 54 sind Lufteintrittsöffnungen 55 vorgesehen, über die Verbrennungsluft dem Abgas beigemischt wird, das mit Feststoffteilen beladen vom Auslaß 14 her zur Verbrennungskammer 45 geführt wird. Das Tauchrohr 54 dient somit zugleich als Mischkammer der zugeführten Verbrennungsluft mit Abgas.

Die obenbeschriebene Ausgestaltung nach Figur 4 arbeitet folgendermaßen :

Die Brennkammer wird durch die elektrische Beheizung auf ca. 500-600° gehalten, diese Temperatur ist ausreichend, die mit einem geringen Abgasteilstrom zugeführten Feststoffteile auf Verbrennungstemperatur zu bringen. Rußteile, die im Bereich des elektrischen Heizkörpers 46 jedoch noch nicht verbrannt wurden, werden im nachgeschalteten Filter 49 aufgefangen. Das Filter hat vom Gasstrom geheizt ebenfalls eine für die Rußverbrennung ausreichend hohe Temperatur, so daß die dort aufgefangenen Rußteile nachträglich vollständig verglühen. Das am Auslaß des Filters austretende gereinigte Brenngas strömt dann im Gegenstrom die Brennkammer 45 und Tauchrohr 54 ringförmig umfassend zur Stirnseite 42 zurück, um über die Abgasleitung 51 auszutreten. Dies bringt einen beträchtlichen Wärmerückgewinn für die Brennkammer 54, so daß die notwendige elektrische Heizleistung stark verkleinert wird. Vorteilhaft wird das Gehäuse 44 gut wärmeisoliert, so daß auch hier die Verlustwärme sehr klein gehalten wird.

Da im Vollastbereich das Abgas nur sehr wenig Sauerstoff enthält, ist es zweckmäßig diesem Abgas über die Luftzufuhrleitung 52 speziell im Vollastbereich und gesteuert durch ein in Abhängigkeit von Betriebsparametern der Brennkraftmaschine betätigtes Ventil 50 Luft zuzumessen. Diese Luft kann durch eine Luftpumpe 56 bereitgestellt werden, die den notwendig höheren Druck gegenüber dem Abgasdruck bereitstellt. Statt der Pumpe 56 kann aber auch die Verbrennungsluft dem Kurbelgehäuse der Brennkraftmaschine entnommen werden, da das das Kurbelgehäuse verlassende Gas ebenfalls unter einem geringen Überdruck steht, und das dem Kurbelgehäuse entweichende Gas ausreichend Sauerstoff und auch Kohlenwasserstoff enthält, die in der Brennkammer 45 ebenfalls unter Wärmeentwicklung verbrannt werden. Dies wirkt im Sinne einer Verminderung der elektrischen Heizleistung.

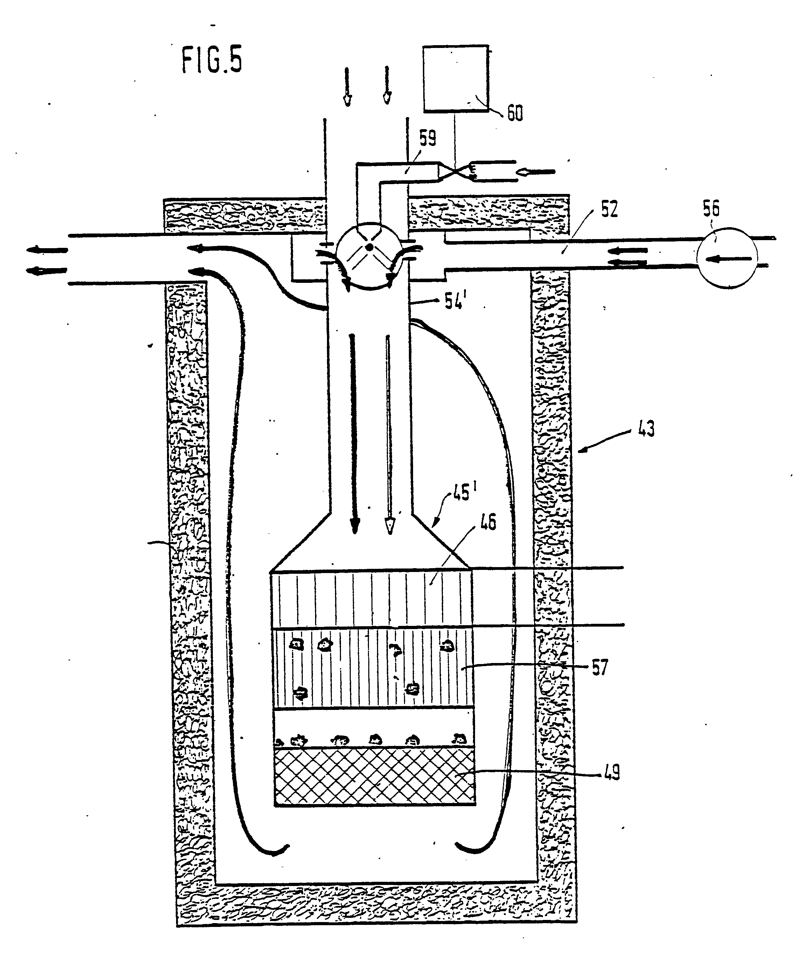

Für größere Brennkraftmaschinen, wie sie z. B. für Nutzkraftfahrzeuge verwendet werden, kann die benötigte elektrische Heizleistung möglicherweise unerwünscht hoch werden. In diesem Fall wird gemäß dem Ausführungsbeispiel nach Figur 5 in der Brennkammer 45 anschließend an den elektrischen Heizkörper 46 ein Katalysatorelement 57 nachgeschaltet, der zwischen dem Heizkörper 46 und dem Filter 49 liegt. Dieser Katalysator verringert die zur Verbrennung der Feststoffteile notwendige Mindesttemperatur. Darüber hinaus mündet in das Tauchrohr 54' eine Kraftstoffleitung 59, über die dem Abgas und der zugeführten Luft Kraftstoff beigemischt wird. Die Menge des zugeführten Kraftstoffs kann über eine Dosiereinrichtung 60 eingestellt werden. Das nunmehr der Brennkammer 45 zugeführte Gemisch aus Abgas, Luft, Kraftstoff und Rußteilchen oder Feststoffteilchen braucht nunmehr nur auf die niedrigere Anspringtemperatur des Katalysators gebracht werden. Die eigentliche Aufheizung der Brennkammer auf 500 bis 600 °C erfolgt durch die katalytische Verbrennung des Kraftstoffes und auch des Rußes selbst.

Bei entsprechender Materialauswahl kann auch der elektrische Heizkörper, der Katalysatorträger und der Filter aus einem einzigen Werkstück bestehen, z. B. einem katalytisch beschichteten elektrisch leitendem Keramikschaum. Bei diesem Ausführungsbeispiel werden Ruß und alle ausgeschiedenen, brennbaren Bestandteile kontinuierlich verbrannt. Beim Ausfall der Anlage wird der Betrieb der Brennkraftmaschine jedoch nicht gestört, da die hier vorgesehene Einrichtung keine Rückwirkung auf die Brennkraftmaschine, z. B. keinen beladungsabhängigen Gegendruck erzeugt, wie das z. B. bei keramischen Filtersystemen im Abgas üblich ist. Der Hilfsenergiebedarf in Form von Strom oder Kraftstoff ist sehr gering. Da die Einrichtung kontinuierlich den anfallenden Ruß verbrennt, entfällt eine Steuerung von Freibrennintervallen. Insbesondere bei Verwendung der Kurbelgehäuseentlüftung für die Zufuhr von zusätzlicher Verbrennungsluft ist ein Energiebedarf für eine Luftpumpe und auch das Bereitstellen einer solchen entbehrlich, was die Kosten der Anlage verringert.

**Patentansprüche**

1. Einrichtung zur Entfernung von Festkörperteilchen aus Abgasen von Brennkraftmaschinen, die für den Betrieb von Kraftfahrzeugen vorgesehen sind, mit einem rohrförmigen Gehäuse (4), an dessen Eintrittsende das Abgas eingeführt wird und dessen Austrittsende mit dem Eingang eines Fliehkraftabscheiders (9) verbunden ist, der einen tangentialen Einlaß an einem Ende eines zylindrischen Teils (10) aufweist, der in einen sich kegelförmig zu einem Feststoffauslaß (14) verjüngenden Teil an seinem anderen Ende übergeht und aus dem ein Tauchrohr (15) koaxial zur Achse des zylindrischen Teils (10) an seinem einlaßseitigen Ende zur Ableitung des gereinigten Abgases abführt und das rohrförmige Gehäuse (4) einen gegen das Gehäuse hochspannungsfest isolierten Träger (16) aufweist, der sich koaxial zur Achse des rohrförmigen Gehäuses erstreckt und in radialen Ebenen dicht nebeneinander angeordnete Sprühscheiben (17) aufweist, die über den Träger mit dem einen Pol einer Hochspannungsquelle (23) verbunden sind, deren anderer Pol an das rohrförmige Gehäuse (4) gelegt ist, dadurch gekennzeichnet, daß das das Rohr (4) durchströmende Abgas eine mittlere Gasstromgeschwindigkeit von 5 bis 30 m/sec aufweist und der Feststoffauslaß (14) zu einem Sammelbehälter (41) führt, der als abnehmbares mechanisches Filter ausgebildet ist.

2. Einrichtung nach Anspruch 1, dadurch gekennzeichnet, daß das Filter aus brennbarem Material besteht.

3. Einrichtung nach Anspruch 1 oder 2, dadurch gekennzeichnet, daß das Filter in einem Schalldämpfergehäuse untergebracht ist.

4. Einrichtung zur Entfernung von Festkörperteilchen aus Abgasen von Brennkraftmaschinen, die für den Betrieb von Kraftfahrzeugen vorgesehen sind, mit einem rohrförmigen Gehäuse (4), an dessen Eintrittsende das Abgas eingeführt wird und dessen Austrittsende mit dem Eingang eines Fliehkraftabscheiders (9) verbunden ist, der einen tangentialen Einlaß an einem Ende eines zylindrischen Teils (10) aufweist, der in einen sich kegelförmig zu einem Feststoffauslaß (14) verjüngenden Teil an seinem anderen Ende übergeht und aus dem ein Tauchrohr (15) koaxial zur Achse des zylindrischen Teils (10) an seinem einlaßseitigen Ende zur Ableitung des gereinigten Abgases abführt und das rohrförmige Gehäuse (4) einen gegen das Gehäuse hochspannungsfest isolierten Träger (16) aufweist, der sich koaxial zur Achse des rohrförmigen Gehäuses erstreckt und in radialen Ebenen dicht nebeneinander angeordnete Sprühscheiben (17) aufweist, die über den Träger mit dem einen Pol einer Hochspannungsquelle (23) verbunden sind, deren anderer Pol an das rohrförmige Gehäuse (4) gelegt ist, dadurch gekennzeichnet, daß das das Rohr (4) durchströmende Abgas eine mittlere Gasstromgeschwindigkeit von 5 bis 30 m/sec aufweist und der Feststoffauslaß (14) zu einer Rußverbrenneinrichtung (43) führt, die eine Brennkammer (45) aufweist, in die auf der Eintrittsseite eine von einer Luftquelle (56) herführende Luftzuführleitung (52) einmündet und in der ein elektrisch beheizter Heizkörper (46) angeordnet ist, dem zum Austritt hin ein Filter (49) nachgeordnet ist, wobei die Brennkammer (45) in einem diese umgebenden, gegen Wärmeabgabe nach außen geschützten Gehäuse (44) eingesetzt ist und die den Austritt der Brennkammer verlassenden Gase im Gegenstrom zu dem in die Brennkammer einströmenden, die Feststoffe führenden Abgas zu einem Auslaß (51) strömen, der auf der Seite des Eintritts des Feststoffauslasses (14) in das Gehäuse (44) liegt.

5. Einrichtung nach Anspruch 4, dadurch gekennzeichnet, daß in der Luftzuführleitung ein in Abhängigkeit von Betriebsparametern der Brennkraftmaschine steuerbares Ventil (50) angeordnet ist.

6. Einrichtung nach Anspruch 5, dadurch gekennzeichnet, daß die Luftzuführleitung bei Vollastbetrieb der Brennkraftmaschine geöffnet ist.

7. Einrichtung nach Anspruch 4, dadurch gekennzeichnet, daß die Luftzuführleitung (52) von der Kurbelgehäuseentlüftung der Brennkraftmaschine herführt.

8. Einrichtung nach einem der vorstehenden Ansprüche, dadurch gekennzeichnet, daß zwischen Einmündung des Feststoffauslasses (14) in das Gehäuse (44) und der Brennkammer (45) eine Mischkammer (54) angeordnet ist.

9. Einrichtung nach Anspruch 8, dadurch gekennzeichnet, daß in der Brennkammer (45') stromabwärts des Heizkörpers (46) ein katalytisch wirksamer Teil (57) angeordnet ist.

10. Einrichtung nach Anspruch 9, dadurch gekennzeichnet, daß in die Mischkammer (54') eine Kraftstoffleitung (59) mündet, in der eine Dosiereinrichtung (60) angeordnet ist.

11. Einrichtung nach Anspruch 9, dadurch gekennzeichnet, daß der Heizkörper (46), der katalytisch wirksame Teil (47) und das Filter (49) einstückig ausgebildet sind und aus einem katalytisch beschichteten, elektrisch leitenden Keramikschaum besteht.

**Claims**

1. A device for removing solid particles from exhaust gases of internal-combustion engines provided for the operation of motor vehicles, with a tubular housing (4), at the inflow end of which the exhaust gas is introduced and the outflow end of which is connected to the entrance of a centrifugal separator (9) having a tangential inlet at one end of a cylindrical part (10) which at its other end merges into a part tapering conically to a solids outlet (14) and from which a dip tube (15) leads off coaxially relative to the axis of the cylindrical part (10) at its end located on the inlet side, to convey away the purified exhaust gas, the tubular housing (4) having a carrier (16) which is insulated relative to the housing so as to be resistant to high tension and extends coaxially relative to the axis of the tubular housing and which has spray discs (17) arranged closely next to one another in radial planes and connected via the carrier to one pole of a high-voltage source (23), the other pole of which is applied to the tubular housing (4), characterized in that the exhaust gas flowing through the tube (4) has a mean gas flow speed of 5 to 30 m/sec, and the solids outlet (14) leads to a collecting vessel (41) which is designed as a removable mechanical filter.

2. A device according to Claim 1, characterized in that the filter consists of combustible material.

3. A device according to Claim 1 or 2, characterized in that the filter is accommodated in a silencer housing.

4. A device for removing solid particles from exhaust gases of internal-combustion engines provided for the operation of motor vehicles, with a tubular housing (4), at the inflow end of which the exhaust gas is introduced and the outflow end of which is connected to the entrance of a centrifugal separator (9) having a tangential inlet at one end of a cylindrical part (10) which at its other end merges into a part tapering conically to a solids outlet (14) and from which a dip tube (15) leads off coaxially relative to the axis of the cylindrical part (10) at its end located on the inlet side, for conveying away the purified exhaust gas, the tubular housing (4) having a carrier (16) which is insulated relative to the housing so as to be resistant to high voltage and extends coaxially relative to the axis of the tubular housing and which has spray discs (17) arranged closely next to one another in radial planes and connected via the carrier to one pole of a high-voltage source (23), the other pole of which is applied to the tubular housing (4), characterized in that the exhaust gas flowing through the tube (4) has a mean gas flow speed of 5 to 30 m/sec, and the solids outlet (14) leads to a soot-burning device (43) having a combustion chamber (45), into which an air feed line (52) coming from an air source (56) opens on the inflow side and in which is arranged an electrically heated heating body (46) followed towards the outflow by a filter (49), the combustion chamber (45) being inserted in a housing (44) surrounding the latter and protected relative to the outside against the emission of heat, and the gases leaving the outflow of the combustion chamber flowing, in counter-flow to the exhaust gas flowing into the combustion chamber and conveying the solids, to an outlet (51) located on the side on which the solids outlet (14) enters the housing (44).

5. A device according to Claim 4, characterized in that a valve (50) controllable as a function of operating parameters of the internal-combustion engine is arranged in the air feed line.

6. A device according to Claim 5, characterized in that the air feed line is opened when the internal-combustion engine operates under full load.

7. A device according to Claim 4, characterized in that the air feed line (52) comes from the crankcase ventilation system of the internal-combustion engine.

8. A device according to one of the preceding claims, characterized in that a mixing chamber (54) is arranged between the mouth of the solids outlet (14) opening into the housing (44) and the combustion chamber (45).

9. A device according to Claim 8, characterized in that a catalytically active part (57) is arranged in the combustion chamber (45') downstream of the heating body (46).

10. A device according to Claim 9, characterized in that a fuel line (59), in which a metering device (60) is arranged, opens into the mixing chamber (54').

11. A device according to Claim 9, characterized in that the heating body (46), the catalytically active part (47) and the filter (49) are made in one piece and consist of a catalytically coated, electrically conductive ceramic foam.

**Revendications**

1. Appareillage pour éliminer des particules solides dans des gaz d'échappement de moteurs à combustion interne prévus pour actionner des véhicules automobiles, appareillage comportant un carter tubulaire (4), à l'extrémité d'entrée duquel sont introduits les gaz d'échappement et dont l'extrémité de sortie est reliée à l'entrée d'un séparateur à force centrifuge (9) qui comporte une admission tangentielle à une extrémité d'une partie cylindrique (10) qui se transforme à son autre extrémité en une partie allant en se rétrécissant en forme de cône vers une évacuation (14) de particules solides, tandis qu'à partir de ce séparateur, un tube plongeur coaxial à la partie cylindrique (10) à son côté admission, va vers l'évacuation des gaz d'échappement épurés, et que le carter tubulaire (4) comporte un support (16), isolé en haute tension par rapport au carter, et qui s'étend coaxialement par rapport à ce carter tubulaire, en comportant dans des plans radiaux des disques à effluves (17) disposés très près les uns des autres et reliés par le support à l'un des pôles d'une source haute-tension (23), dont l'autre pôle est relié au carter tubulaire (4), appareillage caractérisé en ce que les gaz d'échappement parcourant le tube (4) ont une vitesse moyenne d'écoulement de 5 à 30 m/sec et que l'évacuation (14) des particules solides aboutit à un récipient collecteur (41), qui revêt la forme d'un filtre mécanique amovible.

2. Appareillage selon la revendication 1, caractérisé en ce que le filtre est en un matériau combustible.

3. Appareillage selon la revendication 1 ou 2, caractérisé en ce que le filtre est logé dans un carter insonorisant.

4. Appareillage pour éliminer des particules solides dans des gaz d'échappement de moteurs à combustion interne prévus pour actionner des véhicules automobiles, appareillage comportant un carter tubulaire (4), à l'extrémité d'entrée duquel sont introduits les gaz d'échappement et dont l'extrémité de sortie est reliée à l'entrée d'un séparateur à force centrifuge (9) qui comporte une admission tangentielle à une extrémité d'une partie cylindrique (10) qui se transforme à son autre extrémité en une partie allant en se rétrécissant en forme de cône vers une évacuation (14) de particules solides, tandis qu'à partir de ce séparateur, un tube plongeur coaxial à la partie cylindrique (10) à son côté admission, va vers l'évacuation des gaz d'échappement épurés, et que le carter tubulaire (4) comporte un support (16), isolé en haute tension par rapport au carter, et qui s'étend coaxialement par rapport à ce carter tubulaire, en comportant dans des plans radiaux des disques à effluves (17) disposés très près les uns des autres et reliés par le support à l'un des pôles d'une source haute-tension (23), dont l'autre pôle est relié au carter tubulaire (4), appareillage caractérisé en ce que les gaz d'échappement parcourant le tube (4) ont une vitesse moyenne d'écoulement de 5 à 30 m/sec et que l'évacuation (14) des particules solides aboutit à un dispositif (43) de combustion de suie, qui comporte une chambre de combustion (45), dans laquelle débouche, sur le côté entrée, une canalisation (52) d'alimentation en air arrivant d'une source d'air (56), et dans laquelle est disposé un corps chauffant (46) chauffé électriquement, à la suite duquel est disposé, vers la sortie, un filtre (49) la chambre de combustion (45) étant placée dans un carter (44) qui l'entoure et qui est protégé contre les déperditions de chaleur vers l'extérieur, tandis que les gaz quittant la sortie de la chambre de combustion s'écoulent à contre-courant des gaz d'échappement charriant les particules solides et entrant dans la chambre de combustion vers une évacuation (51), située sur le côté de l'entrée de l'évacuation (14) des particules solides dans le carter (44).

5. Appareillage selon la revendication 4, caractérisé en ce qu'une vanne (50), susceptible d'être commandée d'après des paramètres de fonctionnement du moteur à combustion interne, est disposée sur la canalisation d'alimentation en air.

6. Appareillage selon la revendication 5, caractérisé en ce que la canalisation d'alimentation en air est ouverte lors du fonctionnement à pleine charge du moteur à combustion interne.

7. Appareillage selon la revendication 4, caractérisé en ce que la canalisation d'alimentation en air provient de l'aération du carter du vilebrequin du moteur à combustion interne.

8. Appareillage selon l'une des précédentes revendications, caractérisé en ce qu'une chambre de mélange (54) est disposée entre le débouché de l'évacuation (14) des particules solides dans le carter (44) et la chambre de combustion (45).

9. Appareillage selon la revendication 8, caractérisé en ce qu'une partie (57), catalytiquement efficace, est disposée dans la chambre de combustion (45') en aval du corps chauffant (46).

10. Appareillage selon la revendication 9, caractérisé en ce que, dans la chambre de mélange (54'), débouche une canalisation (59) de carburant, sur laquelle est placé un dispositif de dosage (60).

11. Appareillage selon la revendication 9, caractérisé en ce que le corps chauffant (46), la partie (47) catalytiquement efficace, et le filtre (49) sont réalisés d'une seule pièce constituée d'une mousse céramique électriquement conductrice et revêtue d'une couche catalytique.

FIG. 1

# FIG. 2

31    4    31    17    31

FIG. 3

0 152 623

0 152 623

FIG.4

4

FIG.5